# EUROPEAN PATENT SPECIFICATION

(11) **EP 1 903 773 B1**
(45) Date of publication and mention of the grant of the patent: **12.06.2013**
(21) Application number: 07016664.0
(22) Date of filing: 24.08.2007
(51) Int. Cl.: H04N 1/46

(54) **Image processing apparatus and image processing method**
Bildverarbeitungsgerät und Bildverarbeitungsverfahren
Appareil et procédé de traitement d'images

(30) Priority: 20.09.2006 JP 2006253794; 20.09.2006 JP 2006253795
(43) Date of publication of application: 26.03.2008
(73) Proprietor: Murata Machinery, Ltd., 3 Minami Ochiai-cho, Kisshoin Minami-ku, Kyoto-shi, Kyoto (JP)
(72) Inventor: Dokuni, Kenji, Kyoto 612-8686 (JP)
(74) Representative: Schoppe, Fritz

(56) References cited:
- EP-A2- 0 635 971
- US-A1- 2002 005 855
- US-A1- 2004 080 798
- US-A1- 2006 203 280

## Description

### CROSS-REFERENCE TO RELATED APPLICATIONS

This application claims priority under 35 U.S.C. 119 to Japanese Patent Application No. 2006-242189, filed on September 6, 2006, and Japanese Patent Application No. 2006-242193, filed on September 6, 2006.

### BACKGROUND OF THE INVENTION

### 1. Field of the Invention

The present invention relates to an image processing apparatus which converts image data into print data, particularly to an image processing apparatus which utilizes a look-up table to convert full-color image data into full-color print data or black and white print data.

### 2. Description of the Related Art

Conventionally, there has been an image processing apparatus which converts the image data into the print data. The image processing apparatus is implemented in the forms of a printer driver function installed as application software in a personal computer, a printer driver mounted as hardware on the personal computer, a printer controller mounted as software in the printer device, and a printer controller mounted as hardware on the printer driver or the like.

For example, the conventional image processing apparatus includes a table storage unit, a table retaining unit, a data input unit, a data conversion unit, a data output unit, an instruction unit, and table processing unit. The table storage unit stores a plurality of look-up tables. The table retaining unit temporarily retains the look-up table. Image data is inputted to the data input unit. The data conversion unit converts the inputted image data into print data using the temporarily-retained look-up table. The data output unit outputs the converted print data. At least print instructions for a color image and a black and white image are selectively inputted to the instruction input unit. The table processing unit obtains the look-up table from the table storage unit corresponding to store the look-up table in the table retaining unit the inputted print instruction.

A full-color image data includes one lightness value and a plurality of color values. For example, the full-color image data is generated by utilizing a color space expressed in the form of (L, a, b).

A full-color print data includes density value of three primary colors and black. The full-color print data is generated by utilizing the color space expressed in the form of CMYK (Cyan, Magenta, Yellow, and Black). The black and white print data includes a black density value.

When the print instruction for the color image is inputted, the table processing unit obtains a color table from the table storage unit to store the color table in the table retaining unit. When the print instruction for the black and white image is inputted, the table processing unit obtains the black and white table(monochrome table) from the table storage unit to store the black and white table in the table retaining unit.

In the conventional image processing apparatus, when a user inputs the print instruction for the color image at user's request, the full-color print data is generated from the full-color image data. When a user inputs the print instruction for the black and white image at user's request, the black and white print data is generated from the full-color image data. Then, the print data is transmitted from the image processing apparatus to a color printer, which allows the color image or the black and white image to be printed out.

In the conventional image processing apparatus, the full-color image data can be converted properly and simply into the full-color print data and the black and white print data by utilizing the look-up table.

Currently there are various needs as a print data output mode, although the conventional image processing apparatus can generate the full-color print data and the black and white print data from the full-color image data by utilizing the look-up table.

For example, there has been a need for generating monochrome print data except for black from the full-color image data. For this end, there has been known an image processing apparatus which has a dedicated table as one of the look-up tables to convert the full-color image data into the monochrome print data.

However, under such circumstances, it is necessary to store the dedicated look-up table to print the monochrome image or the specific-color image. Because a large capacity is required for the look-up table, it is not preferable to increase the number of look-up tables.

For example, it can be assumed that the monochrome image print data is generated by one of cyan, magenta, yellow, cyan + magenta, cyan + yellow, magenta + yellow, and cyan +magenta + yellow. In such cases, because a large number of large-capacity look-up tables is required, the data capacity used to store the look-up tables is increased.

In order that any color can be selected as the specific color, the number of look-up tables is required as many as the number of specific colors. This is not practical because the huge number of large-capacity look-up tables is required.

There is also a need for generating two-color print data from the full-color image data. For example, the full-color image data whose color space is RGB (Red, Green, and Blue) can be converted into the two-color print data.

More specifically, when a special image including the black and the magenta is printed out, RGB image data is converted into CMYK print data to output only the print data including the black and the specific color of the magenta.

Additionally there has been known a technique in which the RGB image data is converted into the CMYK print data to output the print data including the specific color of the magenta, and the print data except for the specific color is outputted in a second specific color such as the black.

In the conventional image processing apparatus, such waste that the specific-color image data is processed as the full-color image data can be removed when an original printed in the specific color is duplicated. However, this will not reflect color components except for the selected specific color on the print data. Therefore, reproducibility of the color image is remarkably lowered.

Frequently the full-color image data is actually formed by a black and white text and a full-color pattern. For the image data including the black and white text and the full-color pattern, there has been a need for printing out the black and white portion in black and the color portion in specific color. However, the conventional image processing apparatus does not respond to the need.

US 2004/080798 A1 discloses an image processing method and an image processing apparatus for properly enabling a compressed image included in a page layout to be drawn in colors. A print server detects a compressed image in an Encapsulated PostScript (JPEG) format or the like, sets a color management system according to the color plate being processed, and converts values of C, M, Y, and K. For example, when a process on the C color plate is performed, the converting process is performed by using a specific color management system for the C color plate so that the value of "c" in the compressed image becomes a value of K (K_{C} value). In such a manner, the values of K (K_{C}, K_{M}, K_{Y}, and K_{K}) output from the color management systems are converted into values of C, M, Y, and K.

In view of the foregoing, a first object of the present invention is to provide an image processing apparatus and an image processing method, wherein the look-up table for converting the full-color image data into the mono-color print data can be generated from the already-existing full-color table and black and white table(monochrome table).

In view of the foregoing, a second object of the present invention is to provide an image processing apparatus and an image processing method, wherein the look-up table for converting the color portion or black portion of the full-color image data into the print data in specific color can be generated from the already-existing look-up table.

The invention provides for an image processing apparatus according to claim 1 and an image processing method according to claim 17.

### SUMMARY OF THE INVENTION

In order to overcome the problems described above, an image processing apparatus according to a first aspect of the present invention includes a table storage unit, data input unit, a table processing unit, a table retaining unit, a data conversion unit, and a data output unit. The table storage unit stores a color table for converting full-color image data including one lightness value and a plurality of color values into full-color print data including density values of three primary colors and black, and a black and white table(monochrome table) for converting the full-color image data into black and white print data including a density value of black. The image data is inputted to the data input unit. The table processing unit replaces a density value in at least a part of the three primary colors of the color table with a density value of the black and white table while generating a temporary table by replacing all the density values in other parts of the three primary colors and black with zero. The table retaining unit temporarily retains the temporary table. The data conversion unit converts the inputted image data into the print data using the temporarily-retained temporary table. The data output unit outputs the converted print data.

In order to overcome the problems described above, an image processing apparatus according to the first aspect of the present invention includes the table storage unit, the table retaining unit, the data input unit, the data conversion unit, the data output unit, an instruction input unit and the table processing unit. The table storage unit stores a plurality of look-up table including a color table and a black and white table. The table retaining unit temporarily retains a look-up table for data conversion. The image data is inputted to the data input unit. The data conversion unit converts the inputted image data into the print data using the temporarily-retained look-up table. The data output unit outputs the converted print data. At least print instructions for color image, black and white image, and monochrome image are selectively inputted to the instruction unit. The table processing unit obtains the color table from the table storage unit to store the color table in the table retaining unit when the print instruction for color image is inputted, the table processing unit obtaining the black and white table from the table storage unit to store the black and white table in the table retaining unit when the print instruction for black and white image is inputted. The table processing unit obtaining the color table and the black and white table from the table storage unit to generate the temporary table and storing the generated temporary table in the table retaining unit when the print instruction for monochrome image is inputted the temporary table.

Consequently, in the image processing apparatus according to the first and second aspects of the present invention, the temporary table for converting the full-color image data into the monochrome image print data except for the black can accurately be generated in real time from the already-existing and necessary color table and black and white table.

As used herein, the monochrome color shall mean a color except for black. Specifically, the monochrome color includes cyan, magenta, yellow, cyan + magenta, cyan + yellow, magenta + yellow, and cyan + magenta + yellow.

In order to overcome the problems described above, an image processing apparatus according to a second aspect of the present invention includes a table storage unit, a data input unit, a table processing unit, a table retaining unit, a data conversion unit, and a data output unit. The table storage unit stores a color table for converting full-color image data including one lightness value and a plurality of color values into full-color print data including density values of three primary colors and black, and a black and white table for converting the full-color image data into black and white print data including a density value of black. The image data is inputted to the data input unit. The table processing unit generates a temporary table by replacing density values of three primary colors and black with a density value of a specific color in each the lightness value in one of a color portion where at least one of the plurality of color values of the color table is not zero and a black and white portion where all the color values of the color table are zero. The table retaining unit temporarily retains the temporary table. The data conversion unit converts the inputted image data into the print data using the temporarily-retained temporary table. The data output unit outputs the converted print data.

In order to overcome the problems described above, an image processing apparatus according to the second aspect of the present invention includes the table storage unit, the table regaining unit, the data input unit, data conversion unit, data output unit, an instruction unit, and table processing unit. The table storage unit stores a plurality of look-up table including a color table and a black and white table are stored. The table retaining unit temporarily retains a look-up table for data conversion. Image data is inputted to the data input unit. The data conversion unit converts the inputted image data into the print data using the temporarily-retained look-up table. The data output unit outputs the converted print data. At least print instructions for color image, black and white image, and special image are selectively inputted to the instruction input unit. The table processing unit obtains the color table from the table storage unit to store the color table in the table retaining unit when the print instruction for color image is inputted. The table processing unit obtaining the black and white table from the table storage unit to store the black and white table in the table retaining unit when the print instruction for black and white image is inputted. The table processing unit obtaining the color table and the black and white table from the table storage unit to generate the temporary table and storing the generated temporary table in the table retaining unit when the print instruction for special image is inputted the temporary table.

Consequently, in the image processing apparatus according to the present invention, the temporary table for being able to convert one of the color portion and the black and white portion of the full-color image data into the specific-color print data can accurately be generated in real time from the already-existing and essential color table and black and white table.

Various components of the present invention may be formed so as to realize functions thereof. For example, the various components can be realized by dedicated hardware which exerts a predetermined function, an image processing apparatus to which a predetermined function is imparted by a computer program, a predetermined function which is realized in the image processing apparatus by a computer program, and any combination thereof and the like.

The various components of the present invention are not always independently formed. For example, the plurality of components may be formed as one member, one component may be formed by a plurality of members, some component constitutes a part of another component, and a part of some component may overlap a part of another component.

In the present invention, causing the image processing apparatus to perform various operations corresponding to the computer program image shall also mean that the image processing apparatus controls the operations of various devices. For example, storing various pieces of data in the image processing apparatus may includes that a CPU (Central Processing Unit) stores various pieces of data in an information storage medium such as a RAM (Random Access Memory) fixed to the image processing apparatus, and that the CPU stores various pieces of data in the information storage medium such as an FD (Flexible Disc-cartridge) exchangeably loaded on the image processing apparatus using an FDD (FD Drive).

As used herein, the "data is stored" shall mean that the apparatus of the present invention in the "data is stored" state when used. Therefore, the data is not stored when the apparatus of the present invention is shipped, and the apparatus of the present invention is permitted to be setup in the state in which the data is stored before use.

Thus, in the image processing apparatus of the present invention, the temporary table for converting the full-color image data into the monochrome image print data except for the black can accurately be generated in real time from the already-existing and necessary color table and black and white table. Therefore, the monochrome image print data can be generated from the full-color image data without increasing the memory capacity for storing the look-up table.

Furthermore, in the image processing apparatus of the present invention, the temporary table for being able to convert one of the color portion and the black and white portion of the full-color image data into the specific-color print data can accurately be generated in real time from the already-existing and necessary color table and black and white table. Therefore, the special image print data can be generated from the full-color image data without increasing the memory capacity for storing the look-up table.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

Fig. 1 is a block diagram illustrating a logical structure of an image processing apparatus according to a first embodiment of the present invention;

Fig. 2 is a schematic view illustrating setting contents of a full-color table and a black and white table(monochrome table);

Fig. 3 is a schematic view illustrating a logical structure of a look-up table;

Fig. 4 is a flowchart illustrating a data processing method performed by the image processing apparatus;

Fig. 5 is a schematic view illustrating setting contents of a mono-color table;

Fig. 6 is a schematic view illustrating setting contents of a mono-color table of a modification example;

Fig. 7 is a schematic view illustrating a logical structure of an image processing apparatus according to a second embodiment of the present invention;

Fig. 8 is a schematic view illustrating setting contents of a full-color table and a black and white table;

Fig. 9 is a schematic view illustrating a logical structure of a look-up table;

Fig. 10 is a flowchart illustrating a data processing method performed by the image processing apparatus;

Fig. 11 is a schematic view illustrating setting contents of a two-color table; and

Fig. 12 is a schematic view illustrating a logical structure of the two-color table.

### DETAILED DESCRIPTION OF PREFERRED EMBODIMENTS

### (First Embodiment)

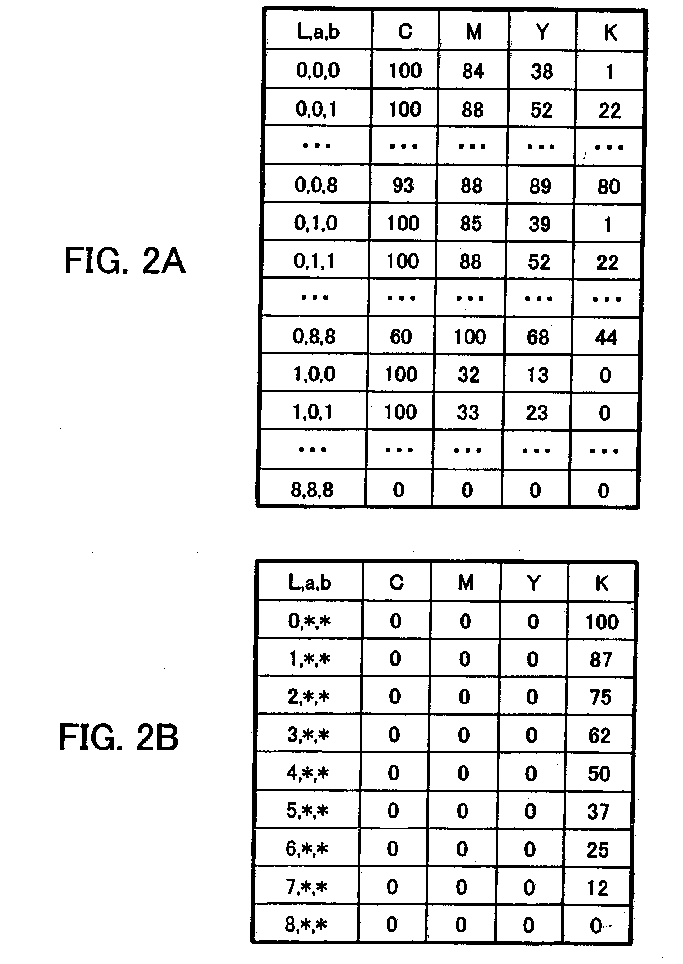

A first embodiment of the present invention will be described below with reference to the drawings. An image processing apparatus 100 of the first embodiment has a plurality of look-up tables of a full-color table and a black and white table (monochrome table). As illustrated in Fig. 2A, the full-color table converts the full-color image data including one lightness value (L) and a plurality of color values (a, b) into the full-color print data including density values of three primary colors (CMY) and black (K). As illustrated in Fig. 2B, the black and white table converts the full-color image data into the black and white print data including a density value of black (K) . One of the plurality of look-up tables is selected to convert the image data into the print data.

The image processing apparatus 100 includes a table processing unit 110. The table processing unit 110 replaces the density value of at least a part of the three primary colors (CMY) of the full-color table with the density value of the black and white table. The table processing unit 110 replaces all the density values of other parts of the three primary colors (CMY) and black (K) with zero. Then the processing unit 110 generates a mono-color table which is a temporary table of one of the look-up tables.

More specifically, the image processing apparatus 100 of the first embodiment corresponds to a so-called personal computer, and the image processing apparatus 100 is formed by general-purpose devices such as a CPU, a ROM (Read Only Memory), a RAM, and an I/F (interface) unit so as to be able to read a computer program to perform corresponding data processing.

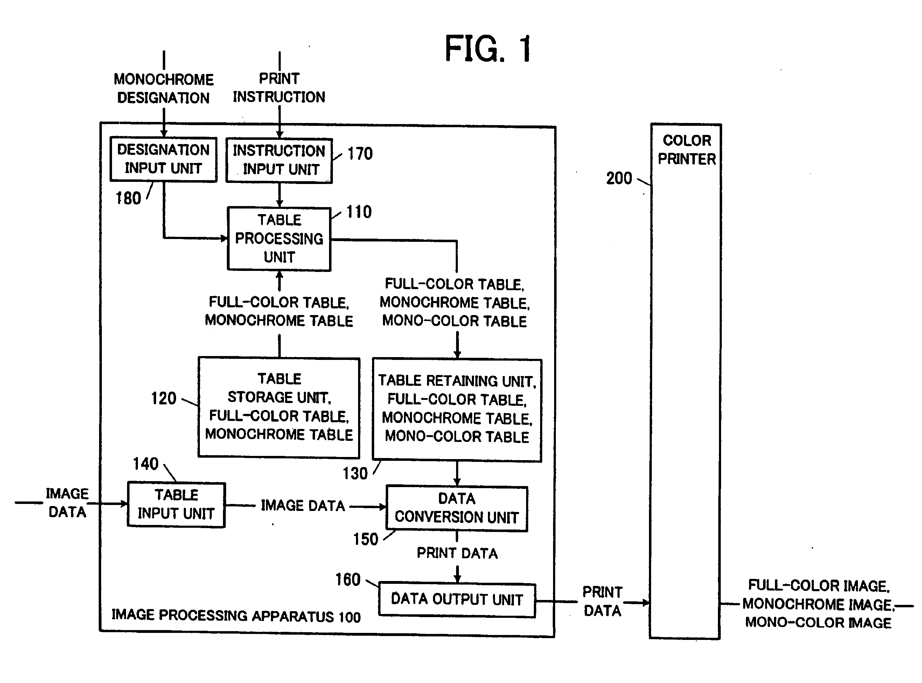

As illustrated in Fig. 1, the image processing apparatus 100 is connected to a color printer 200. The color printer 200 generates a print image with corresponding color inks of CMYK when receiving print data of CMYK which are of the three primary colors and black from the image processing apparatus 100.

Application software of a printer controller corresponding to the color printer 200 is installed in the image processing apparatus 100. In the image processing apparatus 100, the table processing unit 110 and units 120 to 180 are logically formed as various functions of the application software.

Therefore, the image processing apparatus 100 further includes a table storage unit 120, a table retaining unit 130, a data input unit 140, a data conversion unit 150, a data output unit 160, and an instruction input unit 170. A plurality of three-dimensional look-up tables is stored in the table storage unit 120. The table retaining unit 130 temporarily retains the look-up table. The image data is inputted to the data input unit 140. The data conversion unit 150 converts the inputted image data into the print data using the temporarily-retained look-up table (and interpolating computation and the like). The data output unit 160 outputs the converted print data. At least print instructions for the color image, black and white image, and monochrome image are selectively inputted to the instruction input unit 170.

When the print instruction for the color image is inputted, the table processing unit 110 obtains the full-color table as illustrated in Fig. 2A from the table storage unit 120 and stores the full-color table in the table retaining unit 130. When the print instruction for the black and white image is inputted, the table processing unit 110 obtains the black and white table as illustrated in Fig. 2B from the table storage unit 120 and stores the black and white table in the table retaining unit 130.

When the print instruction for the monochrome image is inputted, the table processing unit 110 obtains the full-color table and the black and white table from the table storage unit 120 and stores the full-color table and the black and white table in the table retaining unit 130. At this point, as described above, the table processing unit 110 generates the mono-color table by replacing the density value of at least a part of the three primary colors (CMY) of the full-color table with the density value of the black and white table and by replacing all the density values of other parts of the three primary colors (CMY) and black (K) with zero.

The image processing apparatus 100 also includes a designation input unit 180. Designation data of at least a part of the three primary colors, replaced with the density value of the black and white table, is inputted to the designation input unit 180. Therefore, the table processing unit 110 replaces the density value in at least the part of the three primary colors with the density value of the black and white table according to the inputted designation data.

Each unit of the image processing apparatus 100 is realized by utilizing the hardware such as the I/F unit if needed. However, the entity is realized by causing the CPU which is of the hardware to act according to a computer program stored in an information storage medium such as the RAM.

The computer program is stored in the information storage medium such as the RAM in the form of the software for causing the CPU to perform processing operations including storing the full-color table and the black and white table as the plurality of look-up tables; accepting selectively the at least print instructions for the color image, black and white image, and monochrome image; accepting the designation data of at least a part of the three primary colors, replaced with the density value of the black and white table; accepting an input of image data according to the print instruction or the like; converting the image data into the print data using the full-color table when the print instruction for the color image is inputted; converting the image data into the print data using the black and white table when the print instruction for the black and white image is inputted; replacing the density value of at least the part of the three primary colors of the full-color table with the density value of the black and white table according to the designation data, and replacing all the density values of other parts of the three primary colors and black with zero when the print instruction for the monochrome image is inputted, thereby generating the mono-color table which is one of the look-up tables to convert the image data into the print data using the mono-color table; and outputting the converted print data to the color printer 200.

A data processing method performed by the image processing apparatus 100 having the above configuration will be described below. In the image processing apparatus 100, the full-color table and the black and white table are registered as the three-dimensional look-up table. As illustrated in Fig. 2A, the full-color table converts the image data of (L, a, b) into the print data of the CMYK color image. As illustrated in Fig. 2B, the black and white table converts the image data of (L, a, b) into the print data of the black and white image. In the black and white table, CMY are set to zero to enable only K.

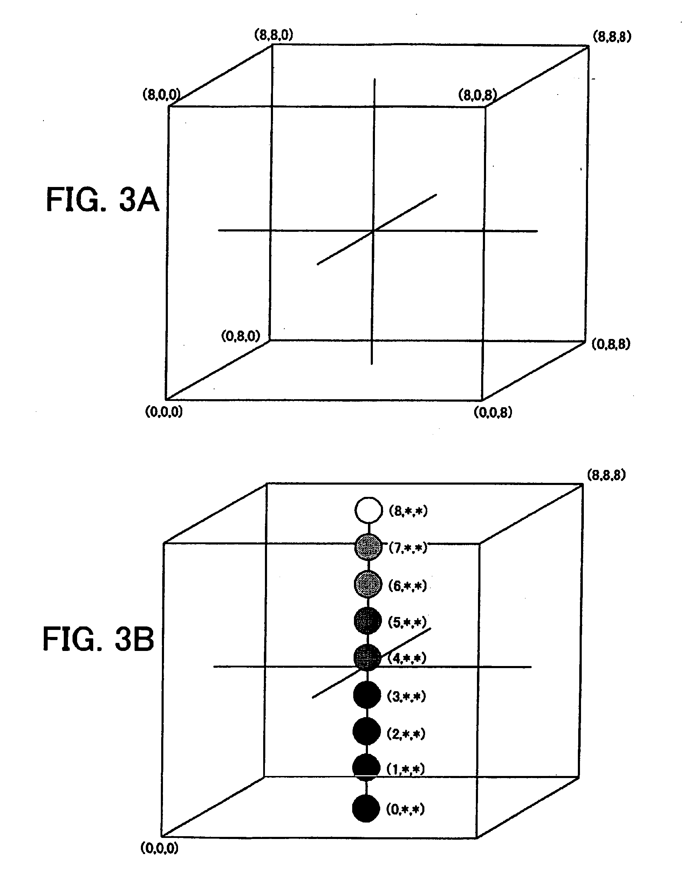

When the (L, a, b) look-up table is schematically expressed in a three-dimensional manner, all the colors of the print data are arranged in a space of (0-8)×(0-8)×(0-8) as illustrated in Fig. 3.

In the three-dimensional space, a vertical direction constitutes lightness and chroma saturation becomes zero in the centers of a horizontal direction and a depth direction. Therefore, as illustrated in Fig. 3B, (L, a, b)=(*, 4, 4) expresses an achromatic color (black and white) having only the lightness without the chroma saturation (the sign * is an arbitrary numerical value ranging from zero to eight).

When an operator causes the image processing apparatus 100 to convert the image data into the print data to output the print data to the color printer 200 at operator's request, the operator inputs the print instruction for the color image, black and white image, or monochrome image to the image processing apparatus 100 while selecting the image data.

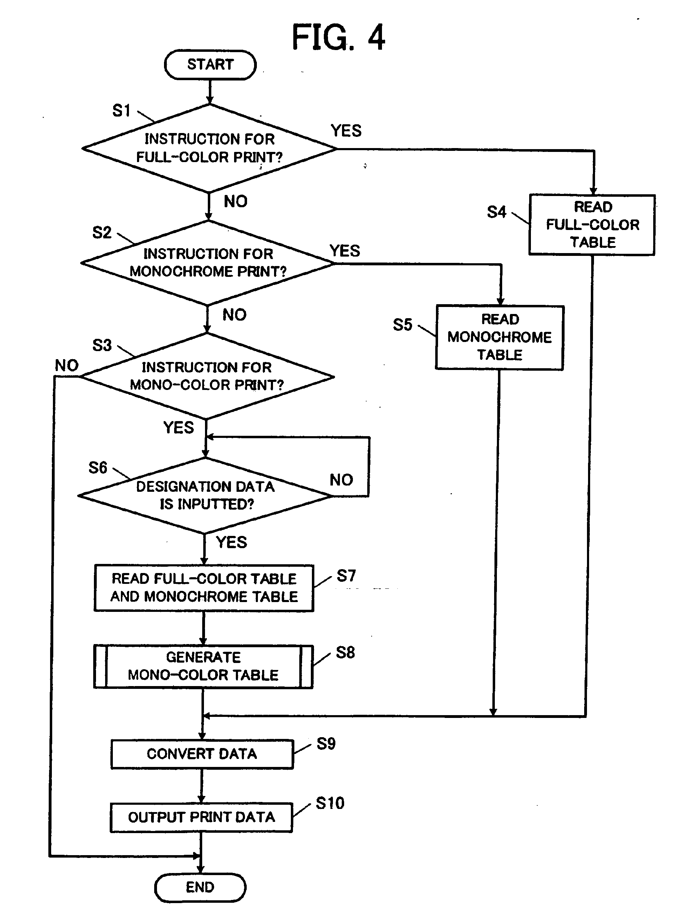

As illustrated in Fig. 4, because the image processing apparatus 100 always stands by for one of the input operations of the color image, black and white image, and monochrome image (Steps S1 to S3), the image processing apparatus 100 starts a corresponding processing operation when detecting the input operation (Steps S4 to S6).

That is, when the print instruction for the color image is inputted (Step S1), the image processing apparatus 100 reads the full-color table from the ROM to temporarily retain the full-color table in a work area of the RAM (Step S4).

The image processing apparatus 100 converts the (L, a, b) image data into the CMYK full-color print data using the temporarily-retained full-color table (Step S9), and the image processing apparatus 100 outputs the CMYK full-color print data to the color printer 200 (Step S10). This enables the color printer 200 to print out the CMYK color image using the inputted print data.

When the print instruction for the black and white image is inputted to the image processing apparatus 100 (Step S2), the image processing apparatus 100 reads the black and white table (Step S5). The image processing apparatus 100 converts the (L, a, b) image data into the black and white print data using the black and white table (Step S9), and the image processing apparatus 100 outputs the black and white print data to the color printer 200 (Step S10) . This enables the color printer 200 to print out the black and white image using the inputted print data.

When the print instruction for the monochrome image is inputted to the image processing apparatus 100 (Step S3), the image processing apparatus 100 stands by for the input operation of the monochrome designation data (Step S6). At this point, a guidance message such as "Select the printed monochrome color from the following items; cyan, magenta, yellow, cyan + magenta, cyan + yellow, magenta + yellow, and cyan + magenta + yellow" is displayed on a display (not illustrated) of the image processing apparatus 100.

When the operator confirms the guidance message to designate the desired monochrome color, the image processing apparatus 100 reads the full-color table and the black and white table to generate the mono-color table (Steps S7 and S8). In this case, the read full-color table is stored in the work area, the image processing apparatus 100 replaces the density value of a part of the three primary colors (CMY) corresponding to the designated monochrome color with the density value of the black and white table, and the image processing apparatus 100 replaces all the density values of other parts of the three primary colors (CMY) and black (K) with zero.

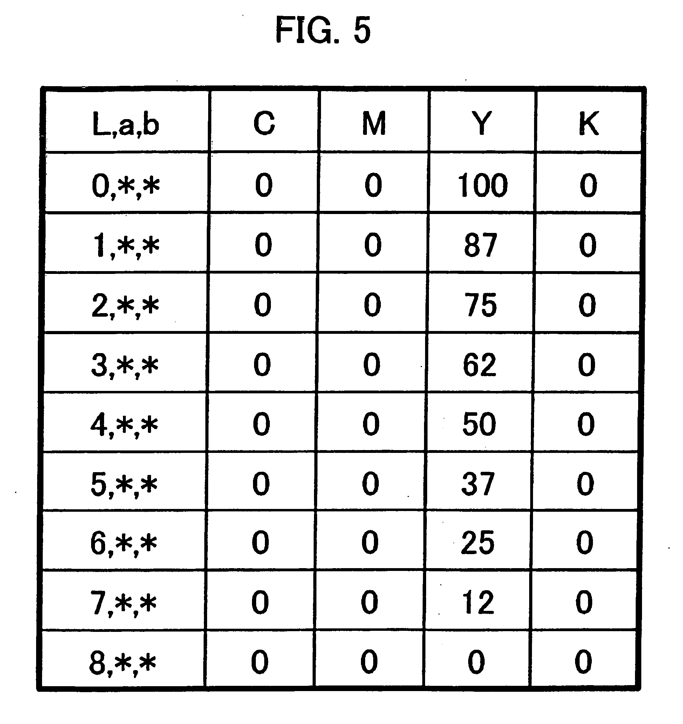

For example, when the yellow is selected as the monochrome color, as illustrated in Fig. 5, the density value of Y which is of a part of the three primary colors is replaced with the density value of the black and white table, and all the density value of CMK which are of other parts of the three primary colors and black are replaced with zero.

Thus, when the mono-color table is generated, the (L, a, b) image data is converted into the monochrome print data using the mono-color table (Step S9). The image processing apparatus 100 outputs the print data to the color printer 200 (Step S10), and the color printer 200 prints out the monochrome image using the inputted print data.

As described above, in the image processing apparatus 100, the mono-color table for converting the full-color image data into the monochrome image print data except for the black can accurately be generated in real time from the already-existing and essential full-color table and black and white table. Therefore, the monochrome image print data can be generated from the full-color image data without increasing the memory capacity for storing the look-up table.

Furthermore, the image processing apparatus 100 accepts the mono-color designation data replaced with the density value of the black and white table, and the density value in at least a part of the three primary colors is replaced with the density value of the black and white table according to the designation data. This enables the image data to be printed out in a mono- color at operator's request.

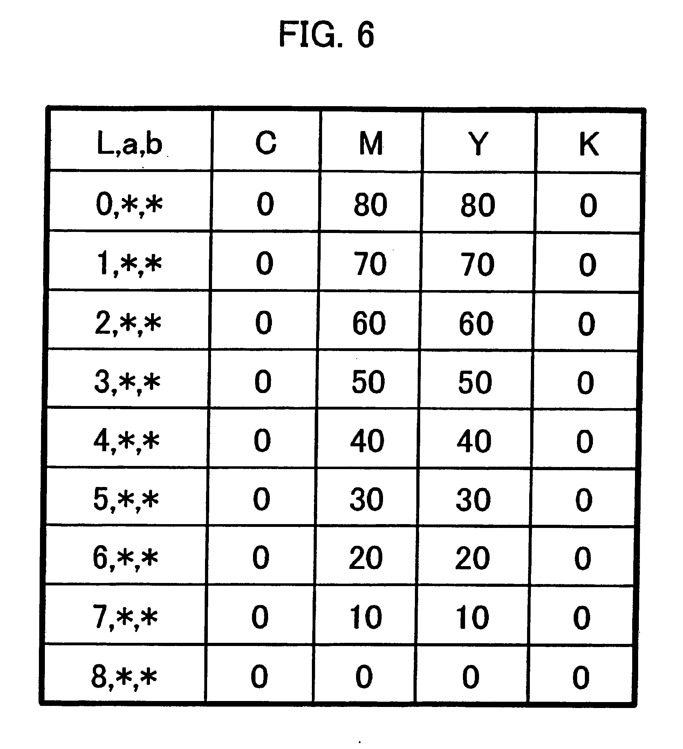

The present invention is not limited to the first embodiment, but various modifications are made without departing from the scope of the present invention. In the first embodiment, one of the density values of the three primary colors in the full-color table is replaced with the density value of the black and white table. However, as illustrated in Fig. 6, the plurality of density values of the three primary colors in the full-color table may be replaced with the density value of the black and white table.

In the first embodiment, the density values of the full-color table are directly replaced with the density value of the black and white table. However, as illustrated in Fig. 6, the density values of the full-color table may be replaced after a factor of 0.8 or the like is multiplied by the density value of the black and white table.

Generally, the print with the black ink is not completely synchronized with the print with the color ink in a rate of lightness change by visual inspection. Therefore, when the density value of the full-color table is directly replaced with the density value of the black and white table, sometimes the number of density steps of the visual inspection is decreased in the monochrome print.

However, when the density values of the full-color table is replaced after the factor of 0.8 or the like is multiplied by the density value of the black and white table, the number of density steps of the visual inspection in the monochrome print can be equalized to that in the black and white print.

In the case where the designated color can be expressed by parts (for example, only C and M) of the three primary colors of the full-color table, the density values in the parts (for example, only C and M) of the three primary colors of the full-color table are converted into the density value of the black and white table. In the case where the designated color can be expressed by all the three primary colors (CMY) of the full-color table, namely, in the case where all the three primary colors of the full-color table are required to express the designated color, the density values in all the three primary colors (CMY) of the full-color table are converted into the density value of the black and white table. In the case where the density values in all the three primary colors of the full-color table are replaced with the density value of the black and white table, because CMY are mixed with the same ratio when the factor is identical for the three primary colors, the generated monochrome color becomes a pseudo achromatic color.

Therefore, in the case where the density values in all the three primary colors of the full-color table are replaced with the density value of the black and white table, at least one of the factors for the three primary colors is caused to differs from other factors, allowing the generation of the mono-color except for the achromatic color.

Furthermore, in the first embodiment, the image processing apparatus 100 always stands by for the manipulation whether the color image, the black and white image, or the monochrome image is inputted, and the image processing apparatus 100 starts the corresponding processing operation when detecting the input manipulation. Alternatively, for example, a default setting is performed such that the color image is printed, and the black and white print and the monochrome print may be performed only when designated by the input manipulation.

In the first embodiment, the CPU is operated according to the computer program stored in the RAM or the like, which allows the units to be logically realized as various functions of the image processing apparatus 100.

Alternatively, the units may be formed as hardware, or the unit may be partially formed as software and stored in the RAM or the like while the units are partially formed as hardware.

### (Second Embodiment)

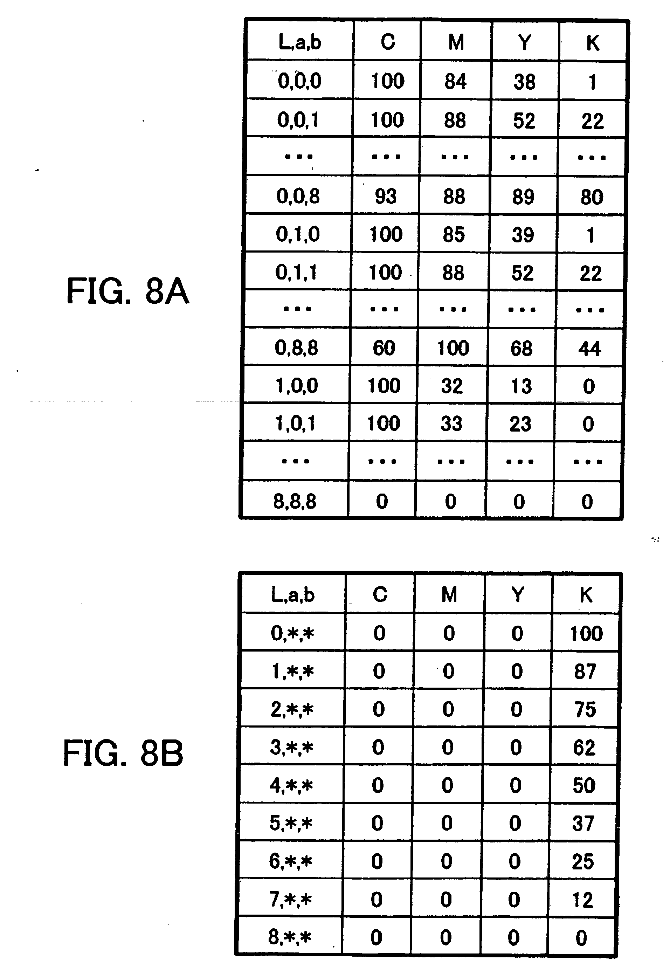

A second embodiment of the present invention will be described below with reference to the drawings. An image processing apparatus 300 of the second embodiment has a plurality of look-up tables of a full-color table and a black and white table(monochrome table). As illustrated in Fig. 8A, the full-color table converts the full-color image data including one lightness value (L) and a plurality of color values (a, b) into the full-color print data including density values of three primary colors (CMY) and black (K). As illustrated in Fig. 8B, the black and white table converts the full-color image data into the black and white print data including a density value of black (K). One of the plurality of look-up tables is selected to convert the image data into the print data.

Furthermore, the image processing apparatus 300 includes a table processing unit 310. The table processing unit 310 generates a two-color table which is a temporary table of one of the look-up tables by replacing density values of the three primary colors (CMY) and black (K) with a density value of a specific color in each lightness value (L) in one of the color portion where at least one of the plurality of color values (a, b) of the full-color table is not zero and the black and white portion where all the color values (a, b) are zero.

More specifically, the image processing apparatus 300 of the second embodiment corresponds to the so-called personal computer, and the image processing apparatus 300 is formed by general-purpose devices such as a CPU, a ROM (Read Only Memory), a RAM, and an I/F (interface) unit so as to be able to read the computer program to perform the corresponding data processing.

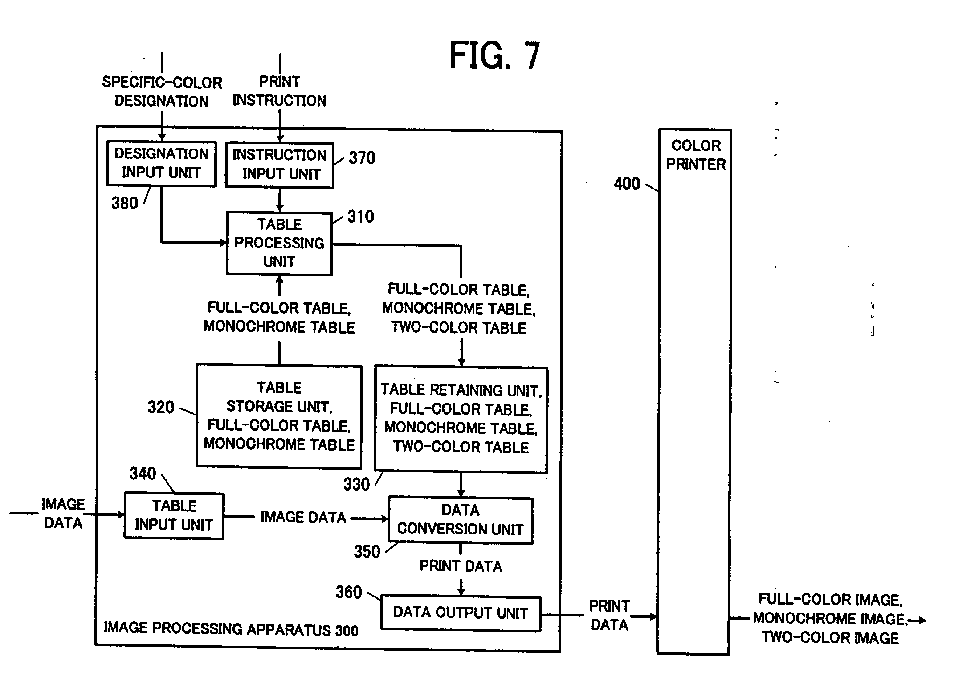

As illustrated in Fig. 7, the image processing apparatus 300 is connected to a color printer 400. The color printer 400 generates a print image with the corresponding color inks of CMYK when receiving the print data of CMYK which are of the three primary colors and black from the image processing apparatus 300.

Application software of a printer controller corresponding to the color printer 400 is installed in the image processing apparatus 300. In the image processing apparatus 300, the table processing unit 310 and units 320 to 380 are logically formed as various functions of the application software.

Therefore, the image processing apparatus 300 further includes a table storage unit 320, a table retaining unit 330, a data input unit 340, a data conversion unit 350, a data output unit 360, and an instruction input unit 370. The plurality of three-dimensional look-up tables are stored in the table storage unit 320. The table retaining unit 330 temporarily retains the look-up table. The image data is inputted to the data input unit 340. The data conversion unit 350 converts the inputted image data into the print data using the temporarily-retained look-up table (and interpolating computation and the like) . The data output unit 360 outputs the converted print data. At least print instructions for the color image, the black and white image, and a two-color image which is of a special image are selectively inputted to the instruction input unit 370.

When the print instruction for the color image is inputted, the table processing unit 310 obtains the full-color table as illustrated in Fig. 8A from the table storage unit 320 and stores the full-color table in the table retaining unit 330. When the print instruction for the black and white image is inputted, the table processing unit 310 obtains the black and white table as illustrated in Fig. 8B from the table storage unit 320 and stores the black and white table in the table retaining unit 330. When the print instruction for the two-color image is inputted, the table processing unit 310 obtains the full-color table and the black and white table from the table storage unit 320 and stores the two-color table in the table retaining unit 330.

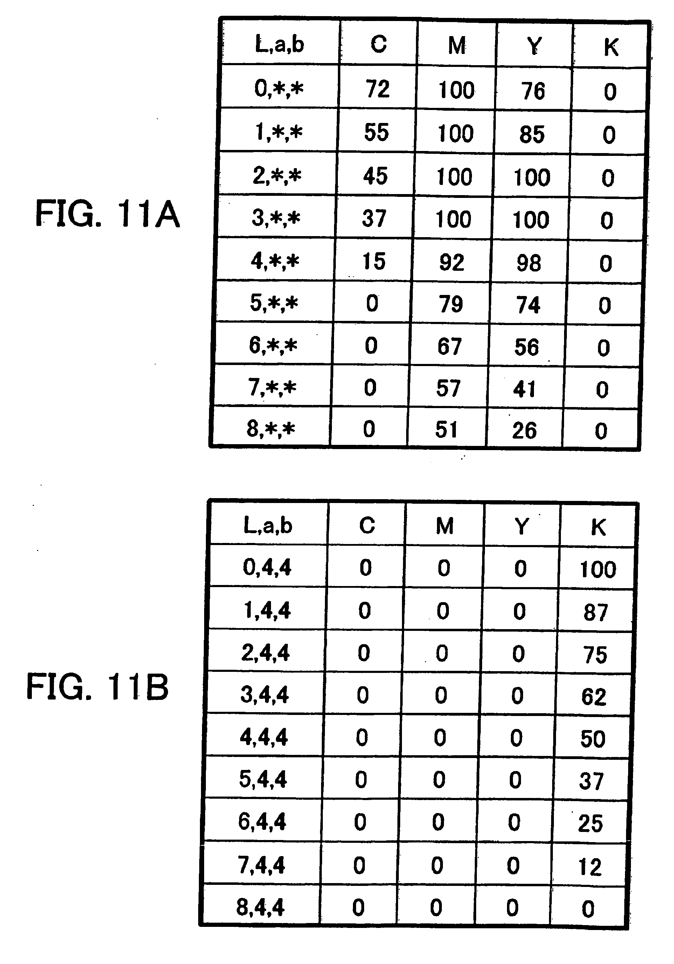

At this point, although described in detail later, as illustrated in Fig. 11A, while the table processing unit 310 replaces the density values of the three primary colors (CMY) with a density value of a first specific color in each lightness value (L) in the color portion where at least one of the plurality of color values (a, b) of the full-color table is not zero, the table processing unit 310 replaces the density value of black (K) with zero.

As illustrated in Fig. 11B, the table processing unit 310 replaces the density values of three primary colors (CMY) and black (K) with the density value of the black and white table which is of a density value of a second specific color in each lightness value (L) in the black and white portion where all the color values (alb) of the full-color table are zero.

The image processing apparatus 300 also includes a designation input unit 380. Designation data of the first specific color is inputted to the designation input unit 380. Therefore, the table processing unit 310 replaces the density values of the three primary colors with the density value of the specific color in each lightness value according to the inputted designation data.

Each unit of the image processing apparatus 300 is realized by utilizing the hardware such as the I/F unit if needed. However, the entity is realized by causing the CPU which is of the hardware to function according to the computer program stored in the information storage medium such as the RAM.

The computer program is stored in the information storage medium such as the RAM in the form of the software for causing the CPU to perform processing operations including storing the full-color table and the black and white table as the plurality of look-up tables; accepting selectively the at least print instructions for the color image, black and white image, and two-color image; accepting the designation data of the first specific color; accepting the image data input according to the print instruction or the like; converting the image data into the print data using the full-color table when the print instruction for the color image is inputted; converting the image data into the print data using the black and white table when the print instruction for the black and white image is inputted; replacing the density values of the three primary colors of the full-color table with the density value of the first specific color in each lightness value according to the designation data, replacing the density value of black with zero, and replacing the density value in the black and white portion of the full-color table with the density value of the black and white table in each lightness value when the print instruction for the two-color image is inputted, thereby generating the two-color table to convert the image data into the print data using the two-color table; and outputting the converted print data to the color printer 400.

A data processing method performed by the image processing apparatus 300 having the above configuration will be described below. Similarly, in the image processing apparatus 300, the full-color table and the black and white table are registered as the three-dimensional look-up table. As illustrated in Fig. 8A, the full-color table converts the image data of (L, a, b) into the print data of the CMYK color image. As illustrated in Fig. 8B, the black and white table converts the image data of (L, a, b) into the print data of the black and white image. In the black and white table, CMY are set to zero to enable only K.

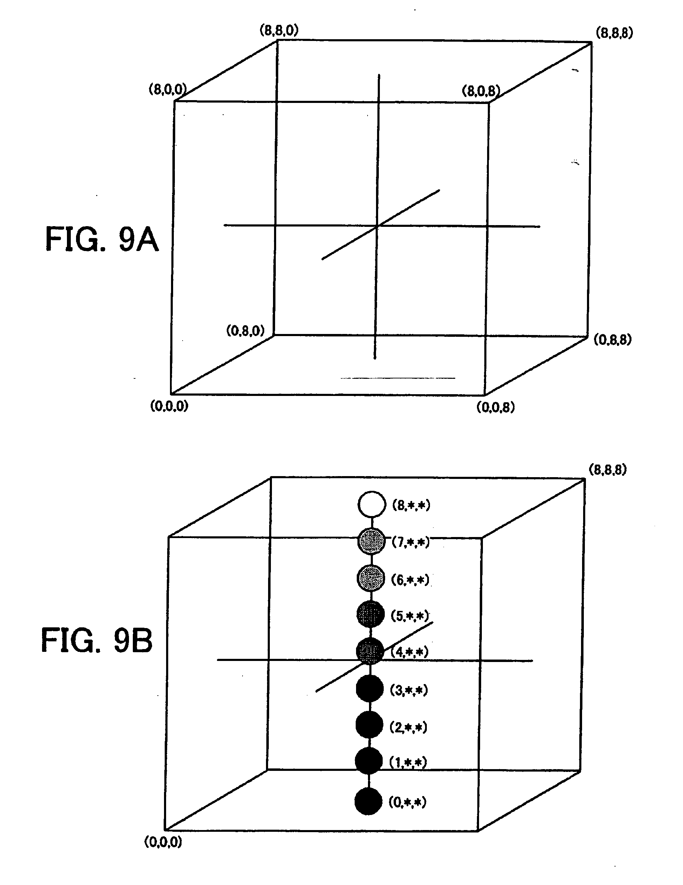

When the (L, a, b) look-up table is schematically expressed in the three-dimensional manner, all the colors of the print data are arranged in the space of (0-8)x(0-8)x(0-8) as illustrated in Fig. 9.

In the three-dimensional space, a vertical direction constitutes lightness and chroma saturation becomes zero in the centers of a horizontal direction and a depth direction. Therefore, as illustrated in Fig. 9B, (L, a, b)=(*, 4, 4) expresses an achromatic color (black and white) having only the lightness without the chroma saturation (the sign * is an arbitrary numerical value ranging from zero to eight). That is, in the second embodiment, the color value becomes zero in the case of (a, b)=(4, 4) in the image data and full-color table.

When an operator causes the image processing apparatus 300 to convert the image data into the print data to output the print data to the color printer 400 at operator's request, the operator inputs the print instruction for the color image, black and white image, or two-color image to the image processing apparatus 300 while selecting the image data.

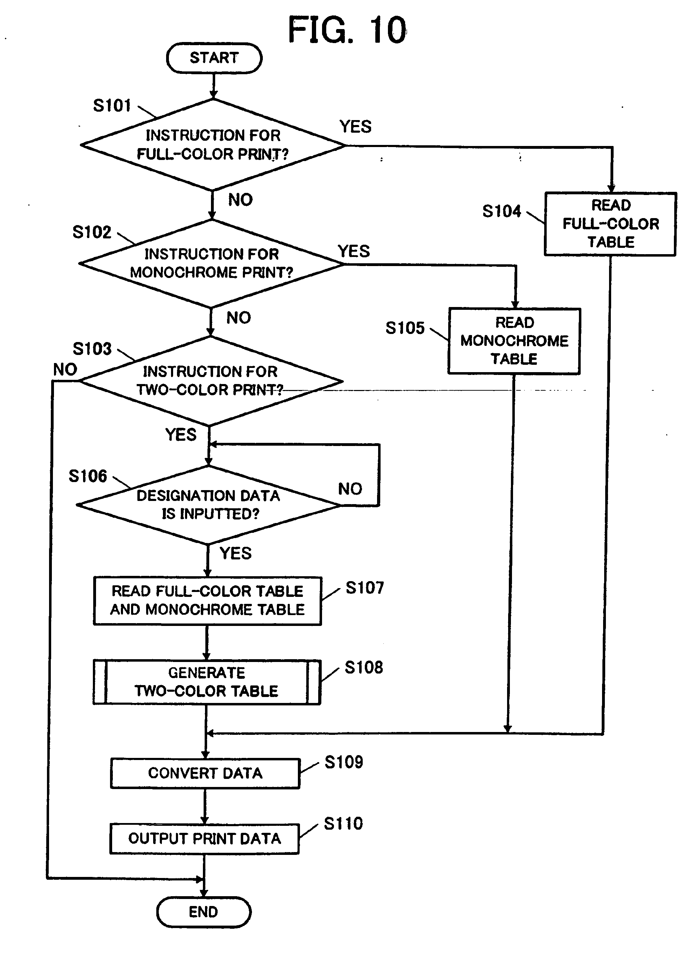

As illustrated in Fig. 10, because the image processing apparatus 300 always stands by for one of the input operations of the color image, black and white image, and two-color image (Steps S101 to S103), the image processing apparatus 300 starts the corresponding processing operation when detecting the input operation (Steps S104 to S106).

That is, when the print instruction for the color image is inputted (Step S101), the image processing apparatus 300 reads the full-color table from the ROM to temporarily retain the full-color table in the work area of the RAM (Step S104).

The image processing apparatus 300 converts the (L, a, b) image data into the CMYK full-color print data using the temporarily-retained full-color table (Step S109), and the image processing apparatus 300 outputs the CMYK full-color print data to the color printer 400 (Step S110) . This enables the color printer 400 to print out the CMYK color image using the inputted print data.

When the print instruction for the black and white image is inputted to the image processing apparatus 300 (Step S102), the image processing apparatus 300 reads the black and white table (Step S105). The image processing apparatus 300 converts the (L, a, b) image data into the black and white print data using the black and white table (Step S109), and the image processing apparatus 300 outputs the black and white print data to the color printer 400 (Step S110). This enables the color printer 400 to print out the black and white image using the inputted print data.

When the print instruction for the two-color image is inputted to the image processing apparatus 300 (Step S103), the image processing apparatus 300 stands by for the input operation of the specific-color designation data (Step S106).

At this point, a rectangular image (not illustrated) in which the colors are arrayed in two-dimensional manner is displayed on a display (not illustrated) of the image processing apparatus 300 along with a guidance message such as "Point the specific color used in the two-color print".

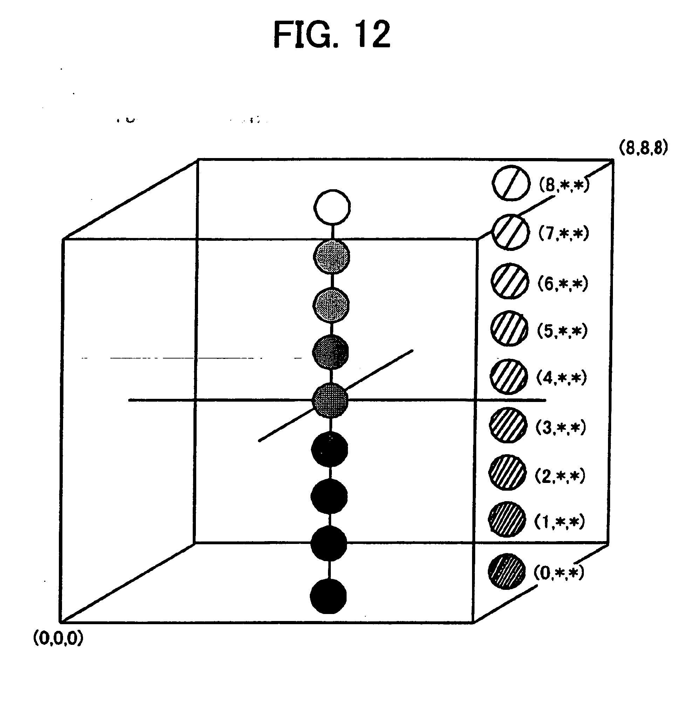

In the three-dimensional look-up table illustrated in Fig. 9, the rectangular image corresponds to a horizontal section where the lightness L is located at latitude of 4. For example, when the specific color of (L, a, b)=(*, 7, 7) is designated, the density values (L, a, b)=(0, 7, 7) to (8, 7, 7) in which each of the two color values (a, b) is constant become the density value of the specific color as illustrated in Fig. 12.

When an operator designates the desired specific color, the image processing apparatus 300 reads the full-color table and the black and white table to generate the two-color table (Steps S107 and S108).

In this case, the image processing apparatus 300 stores the read full-color table in the work area. Then, as illustrated in Fig. 11A, the image processing apparatus 300 replaces the density values of the three primary colors (CMY) in the color portion of the full-color table with the density value of the designated specific color, and the image processing apparatus 300 replaces the density value of black (K) with zero. As used herein the color portion of the full-color table shall mean a portion where at least one of the color values "a" and "b" in Lab is not zero (coordinate of 4 in the illustrated example). That is, the portion where at least one of the color values "a" and "b" is not zero corresponds to the color portion. The black and white portion of the full-color table shall mean a portion where both the color values "a" and "b" in Lab become zero (coordinate of 4 in the illustrated example) . That is, the portion where both the color values "a" and "b" become zero corresponds to the black and white portion.

Then, as illustrated in Fig. 11B, the image processing apparatus 300 replaces the density values of the three primary colors (CMY) and black (K) in the black and white portion of the full-color table with the density value of the black and white table in each lightness value (L). That is, the image processing apparatus 300 generates the density values of the three primary colors and black in the black and white portion of the full-color table, which constitute the two-color table, using the black and white table (Fig. 8B). At this point, obviously the image processing apparatus 300 replaces the density values of the three primary colors (CMY) in the black and white portion with zero.

Fig. 11A illustrates the color portion of the generated two-color table, and Fig. 11B illustrates the black and white portion. When the two-color table is generated, the image processing apparatus 300 converts the (L, a, b) image data into the print data including the specific color and black (K) using the two-color table (Step S109). Because the image processing apparatus 300 outputs the print data to the color printer 400 (Step S110), the color printer 400 prints out the two-color image using the inputted print data.

In the two-color image printed out in the above-described manner, the gray-scale print in specific color is performed to the color portion which has the chroma saturation in the full-color image data, and the gray-scale print in black is performed to the black and white portion which does not have the chroma saturation.

In the image processing apparatus 300 according to the second embodiment of the present invention, as described above, the two-color table for converting the full-color image data into the print data of the two-color image can accurately be generated in real time from the already-existing and essential full-color table and black and white table. Therefore, the two-color image print data can be generated from the full-color image data without increasing the memory capacity for storing the look-up table.

Furthermore, the image processing apparatus 300 accepts the input of the specific-color designation data, and the image processing apparatus 300 replaces the color portion (output value) of the full-color table such that the color portion becomes the specific color. Therefore, the gray-scale print in desired specific color can be performed to the color portion of the full-color image data only by designating one specific color.

Additionally, the black and white portion of the full-color table is automatically replaced with the black and white table. That is, the image processing apparatus 300 replaces the black and white portion of the full-color table which is of the two-color table such that the black and white portion becomes the values of the black and white table illustrated in Fig. 8B. Therefore, the gray-scale print can automatically be performed to the black and white portion of the full-color image data. Accordingly, the two-color print of the specific color and black can be easily realized by designating one specific color.

The present invention is not limited to the second embodiment, but various modifications are made without departing from the scope of the present invention. In the second embodiment, the input of the specific-color designation data is accepted and the color portion of the full-color table is replaced with the specific color. However, the specific color may be set as a default value. In this case, a user may previously select the specific color set as the default value may be selected from three primary colors.

In the second embodiment, the density value in the color portion of the full-color table is replaced with the density value of the specific color, the density value in the black and white portion is replaced with the density value of the black and white table which is of the second specific color.

Alternatively, the density value in the black and white portion may be replaced with the density value of the specific color while the density value in the color portion is replaced with the density value of the black and white table. In this case, in the full-color image data, the gray-scale print in black is performed to the color portion having the chroma saturation, and the gray-scale print in specific color is performed to the black and white portion which does not have the chroma saturation.

Alternatively, the density value in the black and white portion may be replaced with the density value of the second specific color while the density value in the color portion is replaced with the density value of the first specific color. In this case, the gray-scale print in specific color is performed to the color portion of the full-color image data, and the gray-scale print in second specific color is performed to the black and white portion.

Alternatively, the density value in the black and white portion may be replaced with zero while the density value in the color portion is replaced with the density value of the specific color. In this case, the gray-scale print in specific color is performed to the color portion of the full-color image data, and the print is not performed to the black and white portion.

On the contrary, the density value in the black and white portion may be replaced with the density value of the specific color while the density value in the color portion is replaced with zero. In this case, the print is not performed to the color portion of the full-color image data, and the gray-scale print in specific color is performed to the black and white portion.

In the second embodiment, the density value in the portion where the two color values are constant is utilized as the density value in the specific color as illustrated in Fig. 12. However, when the density value is actually used, sometimes the density value is not suitable to the monochrome gray-scale print.

This is attributed to the fact that the three-dimensional look-up table is entirely adjusted in the optimum state by the visual inspection. In the case where the density value becomes problem, the density value of the full-color table around the portion where each of the plurality of color values is constant can previously be defined as the density value of the specific color. That is, not the density value in the portion where each of the plurality of color values is constant, but the density value extracted from the predetermined range centered around the portion where each of the plurality of color values is constant can be used.

In this case, the density value is selected in each specific color and registered as the data. However, because the registered data includes only the coordinate of the density value, the data capacity is not largely increased.

In the second embodiment, the image processing apparatus 300 always stands by for the input manipulation of the color image, the black and white image, or the two-color image, and the image processing apparatus 300 starts the corresponding processing operation when detecting the input manipulation. Alternatively, for example, a default setting is performed such that the color image is printed, and the black and white print and the two-color print may be performed only when designated by the input manipulation.

In the second embodiment, the CPU is operated according to the computer program stored in the RAM, which allows the units to be logically realized as various functions of the image processing apparatus 300.

Alternatively, the units may be formed as hardware, or the unit may be partially formed as software and stored in the RAM while the units are partially formed as hardware.

While the present invention has been described with respect to preferred embodiments thereof, it will be apparent to those skilled in the art that the disclosed invention may be modified innumerous way sand may assume many embodiments other that those specifically set out and described above. Accordingly, it is intended by the appended claims to cover all modifications of the present invention that fall within the scope of the present invention.

## Claims

1. An image processing apparatus comprising:
a table storage unit (120; 320) in which a plurality of look-up table including a color table and a black and white table are stored, the color table for converting full-color image data including one lightness value and a plurality of color values into full-color print data including density values of three primary colors and black, the black and white table for converting said full-color image data into black and white print data including a density value of black;
a table retaining unit (130; 330) which temporarily retains a look-up table for data conversion;
a data input unit (140; 340) to which image data is input;
a data conversion unit (150; 350) which converts said input image data into said print data using said temporarily-retained look-up table; and
a data output unit (160; 360) which outputs said converted print data,wherein said image processing apparatus includes:
an instruction input unit (170; 370) to which at least print instructions for color image, black and white image, and special image are selectively input; and
a table processing unit (110; 310) which obtains said color table from said table storage unit (120; 320) to store said color table in said table retaining unit (130; 330) when said print instruction for color image is input, the table processing unit (110; 310) obtaining said black and white table from said table storage unit (120; 320) to store said black and white table in said table retaining unit (130; 330) when said print instruction for black and white image is input, the table processing unit (110; 310) obtaining said color table and said black and white table from said table storage unit (120; 320) to generate said temporarily-retained look-up table from said color table and said black and white table as a mono-color table of a color other than black if said special image is a mono-color image or as a two-color table if said special image is a two-color image, and storing said generated temporarily-retained look-up table in said table retaining unit (130; 330) when said print instruction for special image is input.

2. The image processing apparatus according to claim 1, further including a designation input unit (180) to which designation data of at least a part of said three primary colors is input, the designation data of at least the part of said three primary colors being replaced with a density value of said black and white table,
wherein said table processing unit replaces a density value in at least a part of said three primary colors with a density value of said black and white table according to said input designation data.

3. The image processing apparatus according to claim 1, further including a designation input unit (380) to which designation data of said specific color is input,
wherein said table processing unit (310) generates said temporary table with said specific color corresponding to said input designation data.

4. An image processing apparatus according to claim 1,
wherein said table processing unit (110) generates said temporary table by replacing a density value in at least a part of said three primary colors of said color table with a density value of said black and white table and by replacing all the density values in other parts of said three primary colors and black with zero, and storing said generated temporary table in said table retaining unit.

5. The image processing apparatus according to claim 4, wherein said table processing unit (110) replaces a density value in at least a part of said three primary colors of said color table by multiplying a density value of said black and white table by a predetermined factor.

6. The image processing apparatus according to claim 5, wherein said table processing unit (110) causes at least said one factor to differ for said three primary colors when replacing density values in all said three primary colors of said color table with a density value of said black and white table.

7. The image processing apparatus according to claim 1,
wherein said table processing unit (310) generates said temporary table by replacing density values of three primary colors and black with a density value of a specific color in each said lightness value in one of a color portion where at least one of said plurality of color values of said color table is not zero and a black and white portion where all the color values of said color table are zero, said table processing unit (310) storing said generated temporary table in said table retaining unit (330).

8. The image processing apparatus according to claim 7, wherein said table processing unit (310) generates said temporary table by replacing density values of three primary colors and black with a density value of a specific color in each said lightness value in one of said color portion and said black and white portion.

9. The image processing apparatus according to claim 8, wherein said table processing unit (310) generates said temporary table by replacing density values of three primary colors with zero in the other of said color portion and said black and white portion.

10. The image processing apparatus according to claim 8, wherein said table processing unit (310) generates said temporary table by replacing density values of three primary colors and black with a density value of a second specific color in each said lightness value in the other of said color portion and said black and white portion.

11. The image processing apparatus according to claim 7, wherein said table processing unit (310) generates said temporary table by replacing density values of three primary colors and black with a density value of a specific color in each said lightness value in both said color portion and said black and white portion.

12. The image processing apparatus according to claim 7, wherein said table processing unit (310) sets a density value of said color table to a density value of said specific color, each of said plurality of color values being constant in the density value of said color table.

13. The image processing apparatus according to claim 7, wherein said table processing unit (310) sets a density value of said color table to a density value of said specific color, the density value of said color table being previously defined around a portion where each of said plurality of color values is constant.

14. The image processing apparatus according to claim 7, wherein said table processing unit (310) generates said temporary table by replacing all the density values of black with zero in a portion which is replaced with a density value of said specific color of said color table.

15. The image processing apparatus according to claim 7, wherein said table processing unit (310) utilizes a density value of said black and white table as a density value of said specific color.

16. An image processing method comprising:
a table storage step of storing a plurality of look-up table including a color table and a black and white table in a table storage unit (120; 320), the color table for converting full-color image data including one lightness value and a plurality of color values into full-color print data including density values of three primary colors and black, the black and white table for converting said full-color image data into black and white print data including a density value of black;
a table retaining step of temporarily retaining a look-up table for data conversion in a table retaining unit (130; 330);
a data input step to which image data is input;
a data conversion step (S9; S109) of converting said input image data into said print data using said temporarily-retained look-up table; and
a data output step (S10; S110) of outputting said converted print data,wherein said image processing method includes:
an instruction input step (S1, S2, S3; S101, S102, S103) of selectively inputting at least print instructions for color image, black and white image, and special image; and
a table processing step of obtaining (S4; S104) said color table from said table storage unit (120; 320) to store said color table in said table retaining unit (130; 330) in said table retaining step when said print instruction for color image is input, the table processing step of obtaining (S5, S105) said black and white table from said table storage unit to store said black and white table in said table retaining unit (130; 330) in said table retaining step when said print instruction for black and white image is input, and the table processing step of obtaining (S7; S107) said color table and said black and white table from said table storage unit to generate said temporarily-retained look-up table from said color table and said black and white table as a mono-color table of a color other than black if said special image is a mono-color image or as a two-color table if said special image is a two-color image, and storing said generated temporarily-retained look-up table in said table retaining unit (130; 330) in said table retaining step when said print instruction (S3; S103) for special image is input.

17. The image processing method according to claim 16,
wherein said table processing step (S8) comprises replacing a density value in at least a part of said three primary colors of said color table with a density value of said black and white table, the table processing step of generating said temporary table by replacing all the density values in other parts of said three primary colors and black with zero and storing said generated temporary table in said table retaining unit (130).

18. The image processing method according to claim 16, further including a designation input process (S6) of inputting designation data of at least a part of said three primary colors, the designation data of at least the part of said three primary colors being replaced with a density value of said black and white table,
wherein, in said table processing process (S8), a density value in at least a part of said three primary colors is replaced with a density value of said black and white table according to said input designation data.

19. The image processing method according to claim 16,
wherein said table processing step (S108) comprises generating said temporary table by replacing density values of three primary colors and black with a density value of a specific color in each said lightness value in one of a color portion where at least one of said plurality of color values of said color table is not zero and a black and white portion where all the color values of said color table are zero, and storing said generated temporary table in said table retaining unit (330).

## Patentansprüche

1. Eine Bildverarbeitungsvorrichtung, die folgende Merkmale aufweist:
eine Tabellenspeichereinheit (120; 320), in der eine Mehrzahl von Nachschlagtabellen, die eine Farbtabelle und eine Schwarzweißtabelle umfassen, gespeichert ist, wobei die Farbtabelle zum Umwandeln von Vollfarbbilddaten, die einen Helligkeitswert und eine Mehrzahl von Farbwerten umfassen, in Vollfarbdruckdaten dient, die Dichtewerte der drei Primärfarben und Schwarz umfassen, die Schwarzweißtabelle zum Umwandeln der Vollfarbbilddaten in Schwarzweißdruckdaten dient, die einen Dichtewert von Schwarz umfassen;
eine Tabellenhalteeinheit (130; 330), die eine Nachschlagtabelle für Datenumwandlung vorübergehend hält;
eine Dateneingabeeinheit (140; 340), in die Bilddaten eingegeben werden;
eine Datenumwandlungseinheit (150; 350), die die Eingangsbilddaten unter Verwendung der vorübergehend gehaltenen Nachschlagtabelle in die Druckdaten umwandelt; und
eine Datenausgabeeinheit (160; 360), die die umgewandelten Druckdaten ausgibt, wobei die Bildverarbeitungsvorrichtung folgende Merkmale aufweist:
eine Anweisungseingabeeinheit (170; 370), in die zumindest Druckanweisungen für Farbbild, Schwarzweißbild und Spezialbild selektiv eingegeben werden; und
eine Tabellenverarbeitungseinheit (110; 310), die die Farbtabelle von der Tabellenspeichereinheit (120; 320) erhält, um die Farbtabelle in der Tabellenhalteeinheit (130; 330) zu speichern, wenn die Druckanweisung für Farbbild eingegeben wird, wobei die Tabellenverarbeitungseinheit (110; 310) die Schwarzweißtabelle von der Tabellenspeichereinheit (120; 320) erhält, um die Schwarzweißtabelle in der Tabellenhalteeinheit (130; 330) zu speichern, wenn die Druckanweisung für Schwarzweißbild eingegeben wird, wobei die Tabellenverarbeitungseinheit (110; 310) die Farbtabelle und die Schwarzweißtabelle von der Tabellenspeichereinheit (120; 320) erhält, um die vorübergehend gehaltene Nachschlagtabelle von der Farbtabelle und der Schwarzweißtabelle als eine Einfarbentabelle einer anderen Farbe als Schwarz zu erzeugen, falls das Spezialbild ein Einfarbenbild ist, oder als eine Zweifarbentabelle, falls das Spezialbild ein Zweifarbenbild ist, und Speichern der erzeugten vorübergehend gehaltenen Nachschlagtabelle in der Tabellenhalteeinheit (130; 330), wenn die Druckanweisung für ein Spezialbild eingegeben wird.

2. Die Bildverarbeitungsvorrichtung gemäß Anspruch 1, die ferner eine Bezeichnungseingabeeinheit (180) umfasst, in die Bezeichnungsdaten von zumindest einem Teil der drei Primärfarben eingegeben werden, wobei die Bezeichnungsdaten von zumindest dem Teil der drei Primärfarben durch einen Dichtewert der Schwarzweißtabelle ersetzt werden,
wobei die Tabellenverarbeitungseinheit einen Dichtewert in zumindest einem Teil der drei Primärfarben gemäß den eingegebenen Bezeichnungsdaten durch einen Dichtewert der Schwarzweißtabelle ersetzt.

3. Die Bildverarbeitungsvorrichtung gemäß Anspruch 1, die ferner eine Bezeichnungseingabeeinheit (380) umfasst, in die Bezeichnungsdaten der spezifischen Farbe eingegeben werden, wobei die Tabellenverarbeitungseinheit (310) die vorübergehende Tabelle mit der spezifischen Farbe erzeugt, die den eingegebenen Bezeichnungsdaten entspricht.

4. Eine Bildverarbeitungsvorrichtung gemäß Anspruch 1,
bei der die Tabellenverarbeitungseinheit (110) die vorübergehende Tabelle erzeugt durch Ersetzen eines Dichtewerts in zumindest einem Teil der drei Primärfarben der Farbtabelle durch einen Dichtewert der Schwarzweißtabelle, und durch Ersetzen aller Dichtewerte in anderen Teilen der drei Primärfarben und Schwarz durch Null, und Speichern der erzeugten vorübergehenden Tabelle in der Tabellenhalteeinheit.

5. Die Bildverarbeitungsvorrichtung gemäß Anspruch 4, bei der die Tabellenverarbeitungseinheit (110) einen Dichtewert in zumindest einem Teil der drei Primärfarben der Farbtabelle ersetzt durch Multiplizieren eines Dichtewerts der Schwarzweißtabelle mit einem vorbestimmten Faktor.

6. Die Bildverarbeitungsvorrichtung gemäß Anspruch 5, bei der die Tabellenverarbeitungseinheit (110) bewirkt, dass sich zumindest ein Faktor für die drei Primärfarben unterscheidet, wenn Dichtewerte in allen drei Primärfarben der Farbtabelle durch einen Dichtewert der Schwarzweißtabelle ersetzt werden.

7. Die Bildverarbeitungsvorrichtung gemäß Anspruch 1,
bei der die Tabellenverarbeitungseinheit (310) die vorübergehende Tabelle erzeugt durch Ersetzen von Dichtewerten von drei Primärfarben und Schwarz durch einen Dichtewert einer spezifischen Farbe in jedem der Helligkeitswerte in entweder einem Farbabschnitt, wo zumindest einer der Mehrzahl von Farbwerten der Farbtabelle nicht Null ist, oder einem Schwarzweißabschnitt, wo alle der Farbwerte der Farbtabelle Null sind, wobei die Tabellenverarbeitungseinheit (310) die erzeugte vorübergehende Tabelle in der Tabellenhalteeinheit (330) speichert.

8. Die Bildverarbeitungsvorrichtung gemäß Anspruch 7, bei der die Tabellenverarbeitungseinheit (310) die vorübergehende Tabelle erzeugt durch Ersetzen von Dichtewerten von drei Primärfarben und Schwarz durch einen Dichtewert einer spezifischen Farbe in jedem der Helligkeitswerte in entweder dem Farbabschnitt oder dem Schwarzweißabschnitt.

9. Die Bildverarbeitungsvorrichtung gemäß Anspruch 8, bei der die Tabellenverarbeitungseinheit (310) die vorübergehende Tabelle erzeugt durch Ersetzen von Dichtewerten von drei Primärfarben durch Null in dem anderen des Farbabschnitts oder des Schwarzweißabschnitts.

10. Die Bildverarbeitungsvorrichtung gemäß Anspruch 8, bei der die Tabellenverarbeitungseinheit (310) die vorübergehende Tabelle erzeugt durch Ersetzen von Dichtewerten von drei Primärfarben und Schwarz durch einen Dichtewert einer zweiten spezifischen Farbe in jedem der Helligkeitswerte in dem anderen des Farbabschnitts oder des Schwarzweißabschnitts.

11. Die Bildverarbeitungsvorrichtung gemäß Anspruch 7, bei der die Tabellenverarbeitungseinheit (310) die vorübergehende Tabelle erzeugt durch Ersetzen von Dichtewerten von drei Primärfarben und Schwarz durch einen Dichtewert einer spezifischen Farbe in jedem der Helligkeitswerte in sowohl dem Farbabschnitt als auch dem Schwarzweißabschnitt.

12. Die Bildverarbeitungsvorrichtung gemäß Anspruch 7, bei der die Tabellenverarbeitungseinheit (310) einen Dichtewert der Farbtabelle auf einen Dichtewert der spezifischen Farbe einstellt, wobei jeder der Mehrzahl von Farbwerten in dem Dichtewert der Farbtabelle konstant ist.

13. Die Bildverarbeitungsvorrichtung gemäß Anspruch 7, bei der die Tabellenverarbeitungseinheit (310) einen Dichtewert der Farbtabelle auf einen Dichtewert der spezifischen Farbe einstellt, wobei der Dichtewert der Farbtabelle vorher um einen Abschnitt herum definiert wurde, wo jeder der Mehrzahl von Farbwerten konstant ist.

14. Die Bildverarbeitungsvorrichtung gemäß Anspruch 7, bei der die Tabellenverarbeitungseinheit (310) die vorübergehende Tabelle erzeugt durch Ersetzen aller Dichtewerte von Schwarz durch Null in einem Abschnitt, der durch einen Dichtewert der spezifischen Farbe der Farbtabelle ersetzt wird.

15. Die Bildverarbeitungsvorrichtung gemäß Anspruch 7, bei der die Tabellenverarbeitungseinheit (310) einen Dichtewert der Schwarzweißtabelle als einen Dichtewert der spezifischen Farbe verwendet.

16. Ein Bildverarbeitungsverfahren, das folgende Schritte aufweist:
einen Tabellenspeicherschritt zum Speichern einer Mehrzahl von Nachschlagtabellen, die eine Farbtabelle und eine Schwarzweißtabelle umfassen, in einer Tabellenspeichereinheit (120; 320), wobei die Farbtabelle zum Umwandeln von Vollfarbbilddaten, die einen Helligkeitswert und eine Mehrzahl von Farbwerten umfassen, in Vollfarbdruckdaten dient, die Dichtewerte von drei Primärfarben und Schwarz umfassen, die Schwarzweißtabelle zum Umwandeln der Vollfarbbilddaten in Schwarzweißdruckdaten dient, die einen Dichtewert von Schwarz umfassen;
einen Tabellenhalteschritt zum vorübergehenden Halten einer Nachschlagtabelle für Datenumwandlung in einer Tabellenhalteeinheit (130; 330);
einen Dateneingabeschritt, in dem Bilddaten eingegeben werden;
einen Datenumwandlungsschritt (S9; S 109) zum Umwandeln der eingegebenen Bilddaten in die Druckdaten unter Verwendung der vorübergehend gehaltenen Nachschlagtabelle; und
einen Datenausgabeschritt (S 10; S 11) zum Ausgeben der umgewandelten Druckdaten, wobei das Bildverarbeitungsverfahren folgende Schritte umfasst:
einen Anweisungseingabeschritt (S1, S2, S3; S101, S102, S103) zum selektiven Eingeben von zumindest Druckanweisungen für Farbbild, Schwarzweißbild und Spezialbild; und
einen Tabellenverarbeitungsschritt zum Erhalten (S4; S 104) der Farbtabelle von der Tabellenspeichereinheit (120; 320), um die Farbtabelle in dem Tabellenhalteschritt in der Tabellenhalteeinheit (130; 330) zu speichern, wenn die Druckanweisung für Farbbild eingegeben wird, wobei der Tabellenverarbeitungsschritt zum Erhalten (S5, S105) der Schwarzweißtabelle von der Tabellenspeichereinheit zum Speichern der Schwarzweißtabelle in der Tabellenhalteeinheit (130; 330) in dem Tabellenhalteschritt dient, wenn die Druckanweisung für Schwarzweißbild eingegeben wird, und der Tabellenverarbeitungsschritt zum Erhalten (S7; S 107) der Farbtabelle und der Schwarzweißtabelle von der Tabellenspeichereinheit zum Erzeugen der vorübergehend gehaltenen Nachschlagtabelle von der Farbtabelle und der Schwarzweißtabelle als eine Einfarbentabelle einer anderen Farbe als Schwarz dient, falls das Spezialbild ein Einfarbenbild ist, oder als eine Zweifarbentabelle, falls das Spezialbild ein Zweifarbenbild ist, und Speichern der erzeugten vorübergehend gehaltenen Nachschlagtabelle in der Tabellenhalteeinheit (130; 330) in dem Tabellenhalteschritt, wenn die Druckanweisung (S3; S103) für Spezialbild eingegeben wird.

17. Das Bildverarbeitungsverfahren gemäß Anspruch 16, bei dem der Tabellenverarbeitungsschritt (S8) das Ersetzen eines Dichtewerts in zumindest einem Teil der drei Primärfarben der Farbtabelle durch einen Dichtewert der Schwarzweißtabelle aufweist, wobei der Tabellenverarbeitungsschritt zum Erzeugen der vorübergehenden Tabelle durch Ersetzen aller Dichtewerte in anderen Teilen der drei Primärfarben und Schwarz durch Null und Speichern der erzeugten vorübergehenden Tabelle in der Tabellenhalteeinheit (130) dient.

18. Das Bildverarbeitungsverfahren gemäß Anspruch 16, das ferner einen Bezeichnungseingabeprozess (S6) umfasst zum Eingeben von Bezeichnungsdaten von zumindest einem Teil der drei Primärfarben, wobei die Bezeichnungsdaten von zumindest dem Teil der drei Primärfarben durch einen Dichtewert der Schwarzweißtabelle ersetzt werden,
wobei in dem Tabellenverarbeitungsprozess (S8) ein Dichtewert in zumindest einem Teil der drei Primärfarben gemäß den eingegebenen Bezeichnungsdaten durch einen Dichtewert der Schwarzweißtabelle ersetzt wird.

19. Das Bildverarbeitungsverfahren gemäß Anspruch 16,
bei dem der Tabellenverarbeitungsschritt (S 108) das Erzeugen der vorübergehenden Tabelle aufweist durch Ersetzen von Dichtewerten von drei Primärfarben und Schwarz durch einen Dichtewert einer spezifischen Farbe in jedem der Helligkeitswerte in entweder einem Farbabschnitt, wo zumindest einer der Mehrzahl von Farbwerten der Farbtabelle nicht Null ist, oder einem Schwarzweißabschnitt, wo alle der Farbwerte der Farbtabelle Null sind, und Speichern der erzeugten vorübergehenden Tabelle in der Tabellenhalteeinheit (330).

## Revendications

1. Appareil de traitement d'images, comprenant:
une unité de mémorisation de tableaux (120; 320) dans laquelle sont mémorisés une pluralité de tableaux de consultation comprenant un tableau de couleurs et un tableau de noir et blanc, le tableau de couleurs étant destiné à convertir les données d'image entièrement en couleur comprenant une valeur de luminance et une pluralité de valeurs de couleur en données d'impression entièrement en couleur comprenant des valeurs de densité de trois couleurs primaires et de noir, le tableau de noir et blanc étant destiné à convertir lesdites données d'image entièrement en couleur en données d'impression noir et blanc comprenant une valeur de densité de noir;
une unité de maintien de tableau (130; 330) qui maintient temporairement un tableau de consultation pour la conversion de données;
une unité d'entrée de données (140; 340) dans laquelle sont entrées les données d'image;
une unité de conversion de données (150; 350) qui convertit lesdites données d'image entrées en lesdites données d'impression à l'aide dudit tableau de consultation maintenu temporairement; et
une unité de sortie de données (160; 360) qui sort lesdites données d'impression converties, où ledit appareil de traitement d'images comporte:
une unité d'entrée d'instructions (170; 370) dans laquelle sont entrées sélectivement au moins les instructions d'impression pour l'image couleur, l'image noir et blanc, et l'image spéciale; et
une unité de traitement de tableau (110; 310) qui obtient ledit tableau de couleurs de ladite unité de mémorisation de tableaux (120; 320) pour mémoriser ledit tableau de couleurs dans ladite unité de maintien de tableau (130; 330) lorsque ladite instruction d'impression pour l'image couleur est entrée, l'unité de traitement de tableaux (110; 310) obtenant ledit tableau de noir et blanc de ladite unité de mémorisation de tableaux (120; 320) pour mémoriser ledit tableau de noir et blanc dans ladite unité de maintien de tableau (130; 330) lorsque ladite instruction d'impression pour l'image noir et blanc est entrée, l'unité de traitement de tableaux (110; 310) obtenant ledit tableau de couleurs et ledit tableau de noir et blanc de ladite unité de mémorisation de tableaux (120; 320) pour générer ledit tableau de consultation maintenu temporairement à partir dudit tableau de couleurs et dudit tableau de noir et blanc comme tableau mono-couleur d'une couleur autre que le noir si ladite image spéciale est une image mono-couleur ou comme tableau bicolore si ladite image spéciale est une image bicolore et pour mémoriser ledit tableau de consultation maintenu temporairement dans ladite unité de maintien de tableau (130; 330) lorsque ladite instruction d'impression pour l'image spéciale est entrée.

2. Appareil de traitement d'image selon la revendication 1, comportant par ailleurs une unité d'entrée de désignation (180) dans laquelle sont entrées les données de désignation d'au moins une partie desdites trois couleurs primaires, les données de désignation d'au moins la partie desdites trois couleurs primaires étant remplacées par une valeur de densité dudit tableau de noir et blanc,
dans lequel ladite unité de traitement de tableaux remplace une valeur de densité dans au moins une partie desdites trois couleurs primaires par une valeur de densité dudit tableau de noir et blanc selon lesdites données de désignation d'entrée.

3. Appareil de traitement d'images selon la revendication 1, comportant par ailleurs une unité d'entrée de désignation (380) dans laquelle sont entrées les données de désignation de ladite couleur spécifique,
dans lequel ladite unité de traitement de tableaux (310) génère ledit tableau temporaire avec ladite couleur spécifique correspondant auxdites données de désignation d'entrée.

4. Appareil de traitement d'images selon la revendication 1,
dans lequel ladite unité de traitement de tableaux (110) génère ledit tableau temporaire en remplaçant une valeur de densité dans au moins une partie desdites trois couleurs primaires dudit tableau de couleurs par une valeur de densité dudit tableau de noir et blanc et en remplaçant toutes les valeurs de densité dans les autres parties desdites trois couleurs primaires et du noir par zéro, et en mémorisant ledit tableau temporaire généré dans ladite unité de maintien de tableau.

5. Appareil de traitement d'images selon la revendication 4, dans lequel ladite unité de traitement de tableaux (110) remplace une valeur de densité dans au moins une partie desdites trois couleurs primaires dudit tableau de couleurs en multipliant une valeur de densité dudit tableau de noir et blanc par un facteur prédéterminé.

6. Appareil de traitement d'images selon la revendication 5, dans lequel ladite unité de traitement de tableaux (110) fait différer au moins ledit un facteur pour lesdites trois couleurs primaires lors du remplacement des valeurs de densité dans toutes lesdites trois couleurs primaires dudit tableau de couleurs par une valeur de densité dudit tableau de noir et blanc.

7. Appareil de traitement d'images selon la revendication 1,
dans lequel ladite unité de traitement de tableaux (310) génère ledit tableau temporaire en remplaçant les valeurs de densité des trois couleurs primaires et de noir par une valeur de densité d'une couleur spécifique dans chaque dite valeur de luminance dans l'une parmi une partie de couleur où au moins l'une de ladite pluralité de valeurs de couleur dudit tableau de couleurs n'est pas zéro et une partie de noir et blanc où toutes les valeurs de couleur dudit tableau de couleurs sont zéro, ladite unité de traitement de tableaux (310) mémorisant ledit tableau temporaire généré dans ladite unité de maintien de tableau (330).

8. Appareil de traitement d'images selon la revendication 7, dans lequel ladite unité de traitement de tableaux (310) génère ledit tableau temporaire en remplaçant les valeurs de densité de trois couleurs primaires et de noir par une valeur de densité d'une couleur spécifique dans chaque dite valeur de luminance dans l'une desdites parties de couleur et ladite partie de noir et blanc.

9. Appareil de traitement d'images selon la revendication 8, dans lequel ladite unité de traitement de tableaux (310) génère ledit tableau temporaire en remplaçant les valeurs de densité de trois couleurs primaires par zéro dans l'autre parmi ladite partie de couleur et ladite partie de noir et blanc.

10. Appareil de traitement d'images selon la revendication 8, dans lequel ladite unité de traitement de tableaux (310) génère ledit tableau temporaire en remplaçant les valeurs de densité des trois couleurs primaires et du noir par une valeur de densité d'une deuxième couleur spécifique dans chaque dite valeur de luminance dans l'autre parmi ladite partie de couleur et ladite partie de noir et blanc.

11. Appareil de traitement d'images selon la revendication 7, dans lequel ladite unité de traitement de tableaux (310) génère ledit tableau temporaire en remplaçant les valeurs de densité des trois couleurs primaires et du noir par une valeur de densité d'une couleur spécifique dans chaque dite valeur de luminance dans ladite partie de couleur et ladite partie de noir et blanc.

12. Appareil de traitement d'images selon la revendication 7, dans lequel ladite unité de traitement de tableaux (310) règle une valeur de densité dudit tableau de couleurs à une valeur de densité de ladite couleur spécifique, chacune de ladite pluralité de valeurs de couleur étant constante en valeur de densité dudit tableau de couleurs.

13. Appareil de traitement d'images selon la revendication 7, dans lequel ladite unité de traitement de tableaux (310) règle une valeur de densité dudit tableau de couleurs à une valeur de densité de ladite couleur spécifique, la valeur de densité dudit tableau de couleurs étant définie préalablement autour d'une partie où chacune de ladite pluralité de valeurs de couleur est constante.

14. Appareil de traitement d'images selon la revendication 7, dans lequel ladite unité de traitement de tableaux (310) génère ledit tableau temporaire en remplaçant toutes les valeurs de densité de noir par zéro dans une partie qui est remplacée par une valeur de densité de ladite couleur spécifique dudit tableau de couleurs.

15. Appareil de traitement d'images selon la revendication 7, dans lequel ladite unité de traitement de tableaux (310) utilise une valeur de densité dudit tableau de noir et blanc comme valeur de densité de ladite couleur spécifique.

16. Procédé de traitement d'images, comprenant:
une étape de mémorisation de tableaux pour mémoriser une pluralité de tableaux de consultation comprenant un tableau de couleurs et un tableau de noir et blanc dans une unité de mémorisation de tableaux (120; 320), le tableau de couleurs étant destiné à convertir les données d'image entièrement en couleur comportant une valeur de luminance et une pluralité de valeurs de couleur en données d'impression entièrement en couleur comportant des valeurs de densité des trois couleurs primaires et du noir, le tableau de noir et blanc étant destiné à convertir lesdites données d'image entièrement en couleur en données d'impression en noir et blanc comportant une valeur de densité du noir;
une étape de maintien de tableau pour maintenir temporairement un tableau de consultation pour la conversion de données dans une unité de maintien de tableau (130; 330);
une étape d'entrée de données dans laquelle sont entrées les données d'image;
une étape de conversion de données (S9; S109) pour convertir lesdites données d'image d'entrée en lesdites données d'impression à l'aide dudit tableau de consultation maintenu temporairement; et
une étape de sortie de données (S10; S110) pour sortir lesdites données d'impression converties, où ledit procédé de traitement d'images comporte:
une étape d'entrée d'instructions (S1, S2, S3; S101, S102, S103) pour entrer sélectivement au moins les instructions d'impression pour l'image en couleur, l'image en noir et blanc, et l'image spéciale; et une étape de traitement de tableau pour obtenir (S4; S104) ledit tableau de couleurs de ladite unité de mémorisation de tableaux (120; 320) pour mémoriser ledit tableau de couleurs dans ladite unité de maintien de tableau (130; 330) à ladite étape de maintien de tableau lorsque ladite instruction d'impression pour l'image en couleur est entrée, l'étape de traitement de tableau pour obtenir (S5, S105) ledit tableau de noir et blanc de ladite unité de mémorisation de tableaux pour mémoriser ledit tableau de noir et blanc dans ladite unité de maintien de tableau (130; 330) à ladite étape de maintien de tableau lorsque ladite instruction d'impression pour l'image en noir et blanc est entrée, et l'étape de traitement de tableaux pour obtenir (S7; S107) ledit tableau de couleurs et ledit tableau de noir et blanc de ladite unité de mémorisation de tableaux pour générer ledit tableau de consultation maintenu temporairement à partir dudit tableau de couleurs et dudit tableau de noir et blanc comme tableau mono-couleur d'une couleur autre que le noir si ladite image spéciale est une image mono-couleur ou comme tableau bicolore si ladite image spéciale est une image bicolore, et mémoriser ledit tableau de consultation maintenu temporairement généré dans ladite unité de maintien de tableau (130; 330) à ladite étape de maintien de tableau lorsque ladite instruction d'impression (S3; S103) pour l'image spéciale est entrée.

17. Procédé de traitement d'images selon la revendication 16, dans lequel ladite étape de traitement de tableaux (S8) comprend le fait de remplacer une valeur de densité dans au moins une partie desdites trois couleurs primaires dudit tableau de couleurs par une valeur de densité dudit tableau de noir et blanc, l'étape de traitement de tableaux étant destinée à générer ledit tableau temporaire en remplaçant toutes les valeurs de densité dans d'autres parties desdites trois couleurs primaires et le noir par zéro et à mémoriser ledit tableau temporaire généré dans ladite unité de maintien de tableau (130).

18. Procédé de traitement d'images selon la revendication 16, comportant par ailleurs un processus d'entrée de désignation (S6) destiné à entrer les données de désignation d'au moins une partie desdites trois couleurs primaires, les données de désignation d'au moins la partie desdites trois couleurs primaires étant remplacées par une valeur de densité dudit tableau de noir et blanc,
dans lequel, dans ledit processus de traitement de tableau (S8), une valeur de densité dans au moins une partie desdites trois couleurs primaires est remplacée par une valeur de densité dudit tableau de noir et blanc selon lesdites données de désignation entrées.

19. Procédé de traitement d'images selon la revendication 16,
dans lequel ladite étape de traitement de tableaux (S108) comprend le fait de générer ledit tableau temporaire en remplaçant les valeurs de densité des trois couleurs primaires et du noir par une valeur de densité d'une couleur spécifique dans chaque dite valeur de luminance dans l'une parmi une partie de couleur où au moins l'une de ladite pluralité de valeurs de couleur dudit tableau de couleurs n'est pas zéro et une partie de noir et blanc où toutes les valeurs de couleur dudit tableau de couleurs sont zéro, et en mémorisant ledit tableau temporaire généré dans ladite unité de maintien de tableau (330).
